(19) Europäisches Patentamt
European Patent Office
Office européen des brevets

(11) **EP 3 965 020 A1**

(12) **EUROPEAN PATENT APPLICATION**

(43) Date of publication:
**09.03.2022 Bulletin 2022/10**

(21) Application number: **20194814.8**

(22) Date of filing: **07.09.2020**

(51) International Patent Classification (IPC):
***G06N 3/08*** *(2006.01)*

(52) Cooperative Patent Classification (CPC):
**G06N 3/084**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Frikha, Ahmed
81549 München (DE)**
• **Krompaß, Denis
81549 München (DE)**
• **Köpken, Hans-Georg
91056 Erlangen (DE)**

(54) **A MODEL FOR A RAPID CONTINUAL ANOMALY DETECTOR**

(57) The present disclosure provides a computer-implemented method for building a model for a rapid continual anomaly detection comprising at least the steps of: acquiring (S1) a sequence of tasks to be learned, wherein each of the tasks includes a training set which consists of data belonging to a majority class and a validation set which consists of data belonging to the majority class and data belonging to a minority class;
for each of the tasks, iteratively:
adapting (S2) parameters of a function representing a model for the anomaly detection to the training set of a current task; and
computing (S3) a first loss providing task-specific feedback for the anomaly detection, wherein the first loss is minimized in terms of performance, on the validation set of the current task, of parameters adapted to the training set of the current task;

computing (S4) a second loss providing the task-specific feedback, wherein the second loss is minimized in terms of performance, on the validation set of each of the tasks, of final parameters adapted to the training sets of all of the tasks; and
updating (S5) parameter-specific learning rates based on a sum of accumulated values of the first loss and accumulated values of the second loss.

FIG 1

— meta-learning
--- learning/adaptation

EP 3 965 020 A1

**Description**

Field of the Invention

The present invention relates to building a model for sequential anomaly detection on several tasks with minimum catastrophic forgetting and overfitting to a majority class.

Background of the Invention

Humans can continually learn new tasks without corrupting their previously acquired abilities. Neural networks, however, tend to overwrite older knowledge and therefore fail at incrementally learning new tasks. This is called the catastrophic forgetting problem. In fact, most of deep learning achievements have been realized in the offline supervised single-task or multi-task learning settings, where the availability of independent and identically distributed (i.i.d.) data can be assumed. Building intelligent agents is able to incrementally acquire new capabilities while preserving the previously learned ones still remains an old and long-standing goal in machine learning research.

Several approaches have been developed to enable continual learning, e.g. by alleviating interference between the sequentially learned tasks, and/or encouraging knowledge transfer between them. While most of the previous works addressed the continual learning problem with neatly class-balanced classification tasks, many real world applications exhibit extreme class-imbalance, e.g. in anomaly detection problems. For example, in industrial manufacturing, of all produced parts, only a few per million are faulty. And since the products and/or machines in the plant are continuously changing, building a central anomaly detector that incrementally improves by learning new anomaly detection tasks would relax this cold-start problem.

Therefore, a method for continual learning which can be adapted to class-imbalanced data is demanded.

Summary of the Invention

Accordingly, it is one of the objectives of the present invention to provide a method and system for continual anomaly detection.

Accordingly, a computer-implemented method for building a model for continual anomaly detection, comprising at least the steps of:

acquiring a sequence of tasks to be learned, wherein each of the tasks includes a training set which consists of data belonging to a majority class, and a validation set which consists of data belonging to the majority class and data belonging to a minority class;

for each of the tasks, iteratively:

adapting parameters of a function representing a model for the anomaly detection to the training set of a current task; and

computing a first loss providing task-specific feedback for the anomaly detection, wherein the first loss is minimized in terms of performance, on the validation set of the current task, of parameters adapted to the training set of the current task;

computing a second loss providing the task-specific feedback, wherein the second loss is minimized in terms of performance, on the validation set of each of the tasks, of final parameters adapted to the training sets of all of the tasks of the acquired sequence of tasks; and

updating parameter-specific learning rates based on a sum of accumulated values of the first loss and accumulated values of the second loss.

In the present context, a majority class may be comprised of data samples with desired (or: normal, or: acceptable, or: regular, or non-anomalous and/or the like) properties, whereas data samples with anomalous (or: abnormal, or: unacceptable, or: irregular, and/or the like) properties may form a minority class. These terminologies may signify that in usual circumstances normal behavior of a system to be monitored is more often the case than abnormal, anomalous behavior. The parameter-specific learning rates represent an intensity, or frequency, with which parameters are adapted/updated.

In some advantageous embodiments, variants, or refinements of embodiments, the parameters adapted to the current task are determined as parameters to be adapted to a next task.

In some advantageous embodiments, variants, or refinements of embodiments, the method further comprises:

acquiring a new sequence of new tasks; and updating the final parameters to parameters further adapted to a new training set of the new tasks.

In some advantageous embodiments, variants, or refinements of embodiments, wherein the new tasks are involved in different manufacturing processes or products from previously acquired sequence of tasks.

In some advantageous embodiments, variants, or refinements of embodiments, the method further comprises: performing the anomaly detection for a live data based on the function representing the model of the anomaly detection configured in terms of the updated final parameters adapted to the training set.

In some advantageous embodiments, variants, or refinements of embodiments, each of the tasks further includes a test set, which does not affect adapting parameters or computing the loss.

In some advantageous embodiments, variants, or refinements of embodiments, the training set, the validation set and the test set are mutually exclusive in each of the tasks.

In some advantageous embodiments, variants, or refinements of embodiments, the updated parameter-specific learning rates are used for adapting the final parameters for learning a new sequence of tasks.

In some advantageous embodiments, variants, or refinements of embodiments, the training set does not include data belonging to the minority class.

In some advantageous embodiments, variants, or refinements of embodiments, the majority class is a class in which larger number of data compared to another class is included.

In some advantageous embodiments, variants, or refinements of embodiments, the parameters of the function are adapted by using a method of gradient descent for the function.

In some advantageous embodiments, variants, or refinements of embodiments, the parameters of the function are adapted based on the parameter-specific learning rates.

In some advantageous embodiments, variants, or refinements of embodiments, the parameter-specific learning rates are updated based on a method of gradient descent and a learning rate for meta-update.

The invention also provides, according to a second aspect, an apparatus configured to perform the method according to any embodiment of the first aspect of the present invention. The apparatus may in particular comprise an input interface, a computing device and an output interface.

The computing device may be realized in hardware, such as a circuit or a printed circuit board and/or comprising transistors, logic gates and other circuitry. Additionally, the computing device may be at least partially realized in terms of software. Accordingly, the computing device may comprise, or be operatively coupled to, a processor (one or more CPUs and/or one or more GPUs and/or one or more ASICs and/or one or more FPGAs), a working memory and a non-transitory memory storing a software or a firmware that is executed by the processor to perform the functions of the computing device. Signals may be received by the input interface and signals that the processor of the computing device creates may be outputted by the output interface. The computing device may be implemented, at least partially, as a microcontroller, an ASIC, an FPGA and so on.

The invention further provides, according to a third aspect, a non-transitory computer-readable data storage medium comprising executable program code configured to, when executed by a computing device, perform the method according to any embodiment of the first aspect.

The invention also provides, according to a fourth aspect, a computer program product comprising executable program code configured to, when executed by a computing device, perform the method according to any embodiment of the first aspect.

The invention also provides, according to a fifth aspect, a data stream comprising, or configured to generate, executable program code configured to, when executed by a computing device, perform the method according to any embodiment of the first aspect.

Brief description of the drawings

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

The numbering of method steps is intended to facilitate understanding and should not be construed, unless explicitly stated otherwise, or implicitly clear, to mean that the designated steps have to be performed according to the numbering of their reference signs. In particular, several or even all of the method steps may be performed simultaneously, in an overlapping way or sequentially.

Fig. 1     shows a schematic diagram illustrating an example of procedures performed by a Model-Agnostic Meta-Learning (MAML);

Fig. 2     shows a schematic flow diagram illustrating a computer-implemented method according to the first aspect of the present invention;

Fig. 3     shows a result of experiment representing retained accuracy of the present disclosure on Omniglot;

Fig. 4     shows a result of experiment representing retained accuracy of the present disclosure on MiniImageNet and CIFAR-FS;

Fig. 5     shows a result of experiment representing percentage and mean of positive learning rates meta-learned by ARCADe-M;

Fig. 6     shows a block diagram schematically illustrating an apparatus according to an embodiment of the second aspect of the present invention;

Fig. 7     shows a block diagram schematically illustrating a computer program product according to an embodiment of the third aspect of the present invention; and

Fig. 8     shows a block diagram schematically illustrating a data storage medium according to an embodiment of the fourth aspect of the present invention.

Detailed Description of the Invention

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the present disclosure, a method for continual anomaly detection (CAD), where different binary classification tasks have to be learned sequentially by using only examples from their respective majority classes for adapting model parameters, is provided. In particular, it may be provided with an approach that relies on meta-learning to yield a parameter initialization that resists to the main challenges of CAD, namely catastrophic forgetting and overfitting to the majority class.

The goal of Continual Anomaly Detection (CAD) or Continual One-Class Classification (ContOCC) is to sequentially learn multiple one-class classification (OCC) tasks without forgetting previously learned one. More precisely, the target model should be able to sequentially learn binary classification tasks by using only examples from their respective normal classes for adapting model parameters, and then achieve a high performance in distinguishing between both classes of each of the learned tasks, when faced with unseen data points. The CAD problem is a prototype for a practical use case where a central anomaly detector for multiple applications is needed and new applications become available gradually in time.

In order to perform CAD, approximating one decision boundary that encompasses all the (normal) majority classes of the observed tasks is necessary. In fact, the examples belonging to the majority class of any observed task should be mapped inside the majority class boundary, and therefore classified as normal. Learning such a decision boundary can be especially challenging due to two inherent problems of neural networks: catastrophic forgetting and overfitting to the majority class, i.e. predicting the normal class label for any input. On the one hand, each model update performed by using examples from a new task shifts our decision boundary away from the normal class of previously learned tasks, resulting in a poorer classification performance on the latter (catastrophic forgetting). On the other hand, since the model is only exposed to (normal) majority class examples, the decision boundary tends to over-generalize and classify any input as normal. In this case, the model would overfit to the normal class and anomalies would not be detected.

It may be defined that a task-sequence S = {$T_1$, ... , $T_n$} as an ordered sequence of OCC tasks $T_i$. To learn S, the classification model is trained on the tasks included in S, one after another. It may be noted that for an OCC task $T_i$, the training set $T_i^{tr}$ and the validation set $T_i^{val}$ i have different data distributions, since $T_i^{tr}$ includes only examples from one class and $T_i^{val}$ is class-balanced. The term 'class-balanced' means a status that a difference of number of data between two different classes is below a threshold value.

The sets of task-sequences may be separated into meta-training ($D_{tr}$), meta-validation ($D_{val}$) and metatesting ($D_{test}$). Hereby all the tasks in these sequences belong to the same domain, i.e. come from a task distribution p(T). To prevent leakage between $D_{tr}$, $D_{val}$ and $D_{test}$, these sets of data must have mutually exclusive classes, i.e. none of the classes building the tasks T included in $D_{tr}$ is used to build a task in $D_{val}$ or $D_{test}$ and vice versa.

Each sequence in $D_{tr}$, $D_{val}$ and $D_{test}$ is composed of a training set and a test set. Let $S_{tr} = \{S_{tr}^{tr}, S_{tr}^{val}\}$ denote a metatraining task-sequence from $D_{tr}$, where $S_{tr}^{tr} = \{T_1^{tr}, ..., T_n^{tr}\}$ is a sequence of the training sets of the tasks composing S, and $S_{tr}^{val} = \{T_1^{val}, ..., T_n^{val}\}$ is a sequence of their validation sets. $S_{tr}^{tr}$ may be referred to as a meta-training training task-sequence and $S_{tr}^{val}$ as a meta-training validation task-sequence. The set of all meta-training training (validation) sequences may be referred to as the meta-training training (validation) set $D_{tr}^{tr}(D_{tr}^{val})$. It may be noted that the sequences in $D_{tr}^{tr}$ include examples from only the majority class of each task, while the sequences in $D_{tr}^{val}$ contain disjoint class-balanced sets of data from each task. The same holds for the meta-validation and meta-testing sets $D_{val}$ and $D_{test}$.

An algorithm that, by using $D_{tr}$, yields a learning strategy enables a classification model to sequentially learn anomaly detection tasks without (or with minimal) forgetting. Applying this learning strategy to a random task-sequence from $D_{test}^{tr}$ would then provide a model that has high performance on $D_{test}^{val}$, hence performing CAD. In the present disclosure, the learning strategy yielded by the proposed meta-learning algorithm consists in a model initialization and a learning rate for each model parameter, which are suitable to perform CAD. Starting from the meta-learned model initialization, taking few gradient descent steps with the meta-learned learning rates to learn each of the OCC tasks in a sequence S leads to a proficient anomaly detector on all tasks.

Hereinafter, a Model-agnostic meta-learning (MAML) (Finn et al., 2017) upon which the present disclosure may be implemented is described.

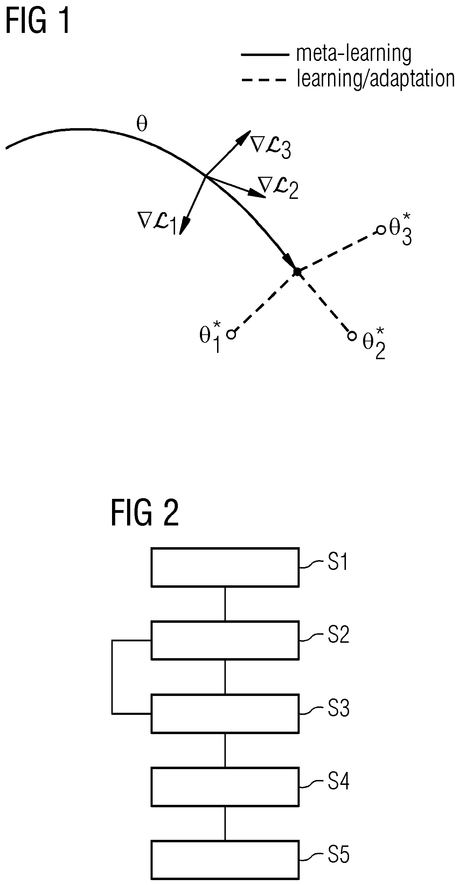

Fig. 1 shows an example of procedures performed by MAML. As shown in Fig. 1, MAML suggests a method of optimizing for the model parameters 0 that can quickly adapt to new tasks.

MAML is an optimization-based meta-learning algorithm. MAML learns a model initialization that enables quick adaptation to unseen tasks using only few data samples. For that, MAML trains a model explicitly for few-shot learning, by using a bi-level optimization mechanism, on tasks $T_i$ coming from the same task distribution p(T) as the unseen target task $T_{test}$.

The model parameters θ denote the set of model parameters. The bi-level optimization mechanism aims to optimize these model parameters to be easily adaptable to unseen tasks $T_i$ which have certain characteristics, e.g. few-shot learning tasks, anomaly detection tasks or continual learning tasks. After adaptation to a task $T_i$, e.g. by taking few gradient steps using its training set, the adapted parameters $\theta_i'$ yield high performance on a held-out test set of the same task. In that sense the meta-learned model parameters θ can be viewed as a parameter initialization that enables quick learning of unseen tasks. The meta-learned parameter initialization represents an inductive bias that facilitates learning tasks with certain characteristics.

To find such a model initialization, a model is explicitly trained for quick adaptation using a set of meta-training tasks. Hereby, these tasks belong to the same domain and have the same characteristics as the test tasks, e.g. if the unseen test tasks are expected to have only few examples, the meta-training tasks should be few-shot learning tasks. In each meta-training iteration, two operations are performed for each task, parameter adaptation and evaluation. Adapting the model initialization θ to a task $T_i$ is done by taking few gradient descent steps using its training set $T_i^{tr}$, yielding a task-specific model $\theta_i'$. The evaluation of the task-specific model uses the task's validation set $T_i^{val}$. The resulting loss $L_{T_i}^{val}(f_{\theta_i'})$ is used to update the initialization θ as shown in Equation 1, where β is the learning rate used for this update.

[Equation 1]

$$\theta \leftarrow \theta - \beta \nabla_\theta \sum_{T_i \sim p(T)} L_{T_i}^{val}\left(f_{\theta_i'}\right)$$

For a model initialization to be suitable for continual learning, i.e. to inhibit catastrophic forgetting, each meta-training and meta-testing task is built as a sequence of classification tasks. Hereby, adapting the parameter initialization to a task-sequence consists in taking a few gradient descent steps on the tasks included in it, sequentially. The parameter initialization is then updated as shown in Equation 1, where $L_{T_i}^{val}\left(f_{\theta_i'}\right)$ is the sum of the losses computed on the validation set of each task in the task-sequence.

Referring to Fig. 1, the model parameters may be discovered, which are sensitive to changes in the task, such that small changes in the parameters will produce large improvements on the loss function (denoted as $L_1, L_2$ and $L_3$ in Fig. 1) of any task drawn from p(T), when altered in the direction of the gradient of that loss.

Fig. 2 shows a schematic flow diagram illustrating a computer-implemented method according to the first aspect of the present invention, i.e. a computer-implemented method for building a model for continual anomaly detection. The procedures described in Fig. 2 may be performed by an apparatus, a computer program product, or a non-transitory computer-readable storage medium. The procedures described in Fig. 2 may be repeated for several times, depending on the number of acquired task-sequences. Applying these procedures represents only one iteration of an iterative optimization of the parametrized model.

In step S1, a sequence of tasks to be learned is acquired. Each of the tasks includes a training set and a validation set. The training set only consists of data belonging to a majority class. The validation set consists of data belonging to the majority class and data belonging to a minority class.

A sequence of tasks may be denoted as S = {T1, ..., Tn}. Each of elements (T1, ..., Tn) included in the sequence may be a task. The multiple tasks included in the sequence may be acquired from different manufacturing processes, different manufacturing machines or different manufacturing products. Thus, a method suggested in the present disclosure enables to learn from multiple anomaly detection tasks, e.g. different manufacturing conditions.

The task may be a set of data. The data may be acquired from a reasonable set of sensors, which measures for example the torques of the various axes in a milling machine and control deviations. It may be assumed that this data for a sufficient set of work pieces and manufacturing conditions (e.g. machining processes). Moreover, the data has to be labeled, e.g. in the sense that a domain expert annotates where anomalies are located in the data. In order to train the model, a preprocessing for the data may be required. In a preprocessing step, various signals may be scaled by their standard deviation for each process.

A data set may include a training set, a validation set. Further, the data set may include a test set. A training set may be used for adaptation of parameters of a function representing a model (e.g. target model) for the anomaly detection. A validation set may be used for evaluating the adaptation of parameters. The test set may be only used for evaluating the model which is finally trained.

According to the present disclosure, the training set includes only majority class data. That is, the training set does not include data belonging to a minority class. In this description, the training set may be referred to as class-imbalanced data'. The term 'class-imbalanced' means a status where a difference of number of data between two different classes is above a threshold value. Meanwhile, the validation set includes both data belonging to the majority class and data belonging to a minority class. In this description, the validation set may be referred to as class-balanced data'. The majority class may be a class in which a larger number of data is included. Therefore, a number of data included in the majority class is larger than a number of data included in the minority class.

For example, in anomaly detection of industrial manufacturing, only a few per million are faulty. Therefore, a number of data included in the majority class is dominantly larger than a number of data included in the minority class.

In step S2 and S3, for each of tasks, an adaptation procedure and computation procedure may be performed. In this description, the computation procedure may be referred to as an evaluation or a validation procedure. Step S2 and S3 may be performed iteratively for each of the tasks in sequence.

In an adaptation procedure S2, parameters of a function representing a model for the anomaly detection may be adapted to the training set included in a current task. The training set only includes data belonging to the majority class. Thus, the parameters are trained only with the data of the majority class.

The parameters may be adapted to training set of current task using parameter-specific learning rate.

The parameters to be adapted in this procedure may be referred to as previous parameters in a current task. The adapted parameters (e.g. current parameters) may be considered as initial parameters to be adapted to a next task.

Initially, values of the parameters may be randomly initialized to be updated for a first task ($T_1$) before executing

procedures described in Fig. 2. That is, initialization of parameters is performed once in prior to step S2, but is not performed in every first task of a task-sequence. The parameters may be adapted by using a gradient descent with respect to the parameterized function.

The function may be a parameterized function ($f_\theta$) representing a model with parameters ($\theta$). The function f is the parametrized model (usually for a neural network).

The parameters for each task may be adapted to minimize a first loss which is providing task-specific feedback for anomaly detection. That is, step S2 may be executed by taking into consideration value of first loss computed in step S3 for each task.

In a procedure of computing loss (S3), a first loss in terms of performance, on the validation set of the current task, of parameters adapted to the training set of the current task the adapted parameters in step S2 for the current task may be computed. The first loss may be computed after adapting parameters for each of the tasks, especially on validation set. In other words, the first loss may be computed after learning each of the tasks. Thus, the first loss may be a set of loss values computed from each of the tasks. The validation set includes both majority class data and minority class data. Thus, the computation procedure may be performed with both data belonging to majority class and data belonging to minority class.

After learning each of the tasks, the value of computed first loss may be accumulated.

According to an embodiment of the present disclosure, the first loss provides task-specific feedback, which may be in a form of a misclassification loss or a cost function in a Markov decision process.

The parameters may be updated during step S2 throughout learning the sequence of tasks. The first loss determined in S3 may be accumulated throughout learning the sequence of tasks.

In step S4, a second loss may be computed. The second loss is also providing task-specific feedback for anomaly detection. The second loss may be minimized in terms of performance, on the validation set of each of the tasks, of final parameters adapted to the training set of all of the tasks. The final parameter may be parameters which are iteratively adapted to all of training set of the tasks. After computing the final parameters, the second loss may be computed for each of the tasks, especially on validation set. In other words, the second loss may be computed after learning all of the tasks included in a task-sequence. Thus, the first loss may be a set of loss values computed from all of the tasks.

After learning all of tasks in a single task-sequence e.g. after acquiring the final parameters, the value of computed second loss may be accumulated for validation set of each of the tasks.

The first loss may be computed after learning validation set in each of the tasks, whereas the second loss may be computed after learning validation set in all of the tasks.

In step S5, parameter-specific learning rates ($\alpha$) may be updated. The parameter-specific learning rates may represent an intensity of updating the parameters. The parameter-specific learning rates ($\alpha$) may be used for adapting parameters. The parameter-specific learning rates ($\alpha$) may be updated based on a sum of accumulated values of the first loss and accumulated values of the second loss. The parameter-specific learning rates ($\alpha$) may be not only a value common to plurality of parameters, but also different from each other. The parameter-specific learning rates ($\alpha$) may be updated to minimize the sum of accumulated first loss and the second loss.

The step S5 corresponds to operation 19 in Algorithm 1. As described in Algorithm 1, parameters and parameter-specific learning rates may be updated based on a learning rate ($\beta$) for meta-update and a sum ($L_{meta}$) of the accumulated value of the first loss and an accumulated value of the second loss.

A test for the model in terms of the final parameters may be performed by using the test set. Depending on a result of the test, performance of the model for anomaly detection may be estimated.

The steps S1 through S5 may be used for training, which is also referred to as meta-training. The training procedure for the continual anomaly detection (e.g. a rapid continual anomaly detector which is referred to as "ARCADe") according to the present disclosure is described with Algorithm 1.

[Algorithm 1]: ARCADe Meta-training procedure

```
Require: D_tr: Set of meta-training task-sequences

Require: β: Learning rate for the meta-update

Require: K: Adaptation set size

   1:   Randomly initialize model parameters θ and parameter-
   specific learning rates α

   2:   while not done do
```

```
3:      Sample a batch of task-sequences $S_i$ from $D_{tr}$

4:      Initialize meta-training loss $L_{meta} = 0$

5:  for each sampled $S_i$ do

6:        Initialize sequence adaptation loss $L_S = 0$

7:        Initialize $\theta'_{i,0} = \theta$ ($\theta'_{i,0}= \theta_{head}$ if $ARCADe - H$)

8:        for $T_j$ in $S_i$ with $j$ in $\{1,\dots, J = length(S_i)\}$ do

9:            Compute adapted parameters using K (normal) majority
            class   examples from   $T_j^{tr}$:
                $\theta'_{i,j} = \theta'_{i,j-1} - \alpha \circ \nabla_{\theta'_{i,j-1}} L_{T_j^{tr}}(f_{\theta'_{i,j-1}})$

10:           Compute $L_{T_j^{val}}(f_{\theta'_{i,j}})$ with the current adapted parameters
            $\theta'_{i,j}$ on the class-balanced val set $T_j^{val}$

11:           $L_S = L_S + L_{T_j^{val}}(f_{\theta'_{i,j}})$

12:       end for

13:       for $T_j$ in $S_i$ do
14:           Compute loss   $L_{T_j^{val}}(f_{\theta'_{i,j}})$   with the final adapted
            parameters   $\theta'_{i,j}$ on val set   $T_j^{val}$

15:           $L_S = L_S + L_{T_j^{val}}(f_{\theta'_{i,j}})$

16:       end for

17:       $L_{meta} = L_{meta} + L_S$

18:   end for

19:   Update $(\theta,\alpha): (\theta,\alpha) \leftarrow (\theta,\alpha) - \beta\nabla_{(\theta,\alpha)}L_{meta}$

20: end while

21: return Meta-learned parameters $\theta$ and learning rates $\alpha$
```

Step S1 of Fig. 2 corresponds to operation 3 of Algorithm 1. Steps S2 and S3 correspond to operations 9 and 10, respectively. Step S4 correspond to operation 14. Step S5 corresponds to operation 19.

It should be noted that the parameters (theta) may be also updated in operation 19. Operation 19 overwrites all updates made in operation 9. The values of parameters which result from operation 9 ($\theta'$) are specific to the tasks of the sequence currently observed. The parameters acquired in operation 19 may be the highly adaptive parameters ($\theta$).

As described in Algorithm 1, in each of meta-training iteration of ARCADe, a batch of task-sequences is randomly sampled from $D_{tr}$. The current parameters initialization θ is adapted to each sequence $S_i$ by taking one (or more) gradient step(s) on the training sets $T_j^{tr}$ of the tasks included in Si sequentially. Hereby the gradient descent steps are performed using the current parameter-specific learning rates α. It may be noted that in Algorithm 1 only one gradient descent update is performed (Operation 9) for simplicity of notation. Extending it to multiple updates is straightforward. A binary cross-entropy loss may be used for all loss functions mentioned in Algorithm 1.

It may be noted that anomaly detection tasks (or OCC tasks), i.e. each task $T_j$ includes a training set $T_j^{tr}$ with only majority class examples and a class-balanced validation set $T_j^{val}$. For each task $T_j$, the loss on the class-balanced held-out validation set $T_j^{val}$ may be computed twice. The first time (Operation 10) is done directly after learning $T_j$ by using the adapted model $\theta'_{i,j}$. This ensures a high model performance on the task immediately after it is learned. The second time (Operation 14) is conducted after learning all the tasks in $S_i$, i.e. using the final model adapted to that sequence $\theta'_{i,J}$. This maximizes the last model's performance on all the tasks in the sequence, hence minimizing catastrophic forgetting. These two losses are computed for each task in Si and added to the sequence adaptation loss $L_s$. The model initialization and learning rates are updated in each meta-training iteration by minimizing $L_{meta}$ which is the sum of the adaptation losses Ls (also referred to as a first loss and a second loss) of each sampled task-sequence $S_i$ (Operation 19). In that sense, ARCADe may explicitly optimize for having a high performance on all tasks contained in a sequence, immediately after learning them and after having learned them all sequentially, while using only examples from their majority class.

In order to ensure that the model has a high performance on a task $T_j$ at all points in time after learning it, one could compute the loss on its validation set $T_j^{val}$ after learning each task $T_k$ subsequent to $T_j$ and add it to $L_s$. Here the loss would be computed using the current model parameters $\theta'_{i,k}$ after learning a task $T_k$. With this manner, it may minimize forgetting task $T_j$ in all points in time while incrementally learning new tasks ($T_k$). However, in this case, the computational cost for computing Ls would increase exponentially with the length of the task-sequence, which does not scale for long task-sequences. Instead the procedure approximates this additional optimization objective by adding to $L_s$ the validation loss of one randomly sampled previous task $T_j$, every time a new task $T_k$ in the sequence is learned. It may be noted that this procedure cannot be performed for the first task in the sequence, since it has no previous tasks. Even though these additional loss terms may be computed and use them for our experimental evaluation, this matter may not be mentioned in Algorithm 1 for simplicity of notation.

Once meta-training is done, the best performing initialization and learning rates are used to learn task-sequences from the meta-testing set $D_{test}$. Here, the model initialization is sequentially adapted to the tasks from the test task-sequence using their training sets and the meta-learned learning rates, as done during meta-training (Operations 8 and 9 in Algorithm 1). Thereafter the adapted model is evaluated on the class-balanced validation sets of these tasks, as done in meta-training (Operations 13 and 14 in Algorithm 1). It may be noted that the selection of the best performing model initialization and learning rates is done by conducting validation episodes (adaptation and evaluation) using the task-sequences from the meta-validation set $D_{val}$, throughout meta-training.

It may be assumed that meta-learning parameter-specific learning rate enables the optimization algorithm to identify the parameters that are responsible for overfitting to the majority class and/or for catastrophic forgetting, and reduce their learning rates.

Before performing the adaptation updates (Operation 9 in Algorithm 1), the learning rates may be configured to have values between 0 and 1. This configuration may prevent them from having negative values, which would lead to taking gradient ascent steps on the task adaptation loss $L_{T_j^{tr}}$. The meta-update (Operation 19 in Algorithm 1) may indeed update the learning rates to have negative values since performing gradient ascent on the one-class training set of a task prevents overfitting to that class (by increasing the loss on that class). The lower overfitting to the majority class leads to a lower loss on the class-balanced validation set $(L_{T_j^{tr}}(f_{\theta'_{i,j}}))$, which results in a lower $L_{meta}$. By clipping the negative learning rates to 0, the corresponding parameter (responsible to overfitting to the majority class) may not be updated during task-adaptation. It may be considered as a task-agnostic parameter and is used as for all tasks, as opposed to other parameters which are updated to task-specific values. To speed-up meta-training, it may be possible to conduct the first n meta-training iterations with constant learning rates, before meta-learning them along with the initialization (Operation 13 in Algorithm 1).

There may exist two variants of ARCADe: ARCADe-M, which is configured to meta-learn an initialization and a learning rate for all model parameters, and ARCADe-H, which does the same but only for the parameters of the classification head, i.e. the output layer. For the parameters of the backbone layers, ARCADe-H does not learn an initialization but rather task-agnostic end values, which do not have to be updated depending on the task-sequence that has to be learned. When learning tasks sequentially ARCADe-H updates only the parameters of the output layer with their corresponding meta-learned learning rates. The only difference in the meta-learning procedure can be seen in Operation 7 from Algorithm 1.

After meta-training procedure, a model application (deployment) may be performed. When deploying the model for detecting anomalies for multiple new manufacturing conditions (e.g. new machining processes), it may be assumed that, for each manufacturing condition, sufficient data of normal machining has been collected, e.g. during the calibration phase of the machine and process. For the model application, steps S2-S3 adapt the model parameters quickly to each of the new scenarios sequentially. More specifically, in model application, a new sequence of new tasks may be acquired. Then, the final parameters may be adapted to a training set of the new tasks. The the new tasks are involved in different manufacturing processes or products from previously acquired sequence of tasks.

Every time a new manufacturing condition arises (e.g. acquired a new machine or designed a new product), the steps S2 and S3 can be applied to the model to adapt it to this new manufacturing condition, without forgetting the previously learned scenarios.

After deployment, the model may go into production mode i.e. performing anomaly detection in all manufacturing conditions it was exposed to, the continuously learned classifier model to predict anomalies may be used for the live data. According to an embodiment of the present disclosure, the anomaly detection for a live data may be performed based on the function representing the model of the anomaly detection configured with the adapted final parameters. The live data may be used as an target data for the anomaly detection. More specifically, the deployment may be performed as follows:

- Preprocess the live data coming from any of the manufacturing conditions that the model was exposed to during model application.
- Initialize the model with the current parameters $\theta_{j+1}$ found after having learned the last encountered task.
- Predict anomaly probabilities for the live data with the classifier model.

According to embodiments of the present disclosure, anomaly detection without catastrophic forgetting and overfitting to majority class may be achieved.

Algorithm 2 shows another example of pseudo code for training the model according to an embodiment of the present disclosure. In Algorithm 2, it may be considered that the scenario where each different manufacturing condition is a different manufacturing process P.

[Algorithm 2]

```
1. Preprocess the data

2. Randomly initialize the classifier model parameters θ

3. Randomly initialize the generator model parameters ω

4. while not converged

5.    Sample a process sequence length l <= number of available
      processes

6.    Sample a batch of process sequences Tᵢ, each containing l
      randomly sampled process Pⱼ ~ p(P)

7.    for each Tᵢ do:

8.       Make a copy on the current classifier initialization θᵢ,₀
         = θ

9.       for each Pⱼ in Tⱼ do:

10.         Sample k training examples of normal machining
            behavior from Pⱼ

11.         Generate k' training examples of anomalous machining
            behavior using the generator model ω using the
            previously sampled k examples

12.         Evaluate the anomaly detection performance of the
```

```
                 classifier model on the original and generated

                 examples

    13.          Update the classifier model parameters θ_{i,j} to θ_{i,j+1}

                 using a stochastic gradient descent update rule.

    14.     end for

    15.     Sample m anomaly detection training examples from each

            of the l processes P_j in T_i

    16.     Compute error of the classifier model θ_{i,j} with respect to

            θ and ω

    17.     end for

    18.     update the classifier model parameters θ and the

            generative model parameters ω to minimize the average of

            the errors computed in step 16 using a stochastic descent

            update rule

    19.  end while
```

As shown in Algorithm 2, a meta-learning algorithm that learns an initialization for a deep learning model is provided. The meta-learning algorithm enables to learn multiple anomaly detection tasks (from different manufacturing conditions) in a sequential manner and using only few normal data. This initialization has the unique characteristic of alleviating two known problems of deep learning models, namely catastrophic forgetting and overfitting to the majority class.

In the context of the present disclosure, the term "task" may be used to refer to a sequence of multiple different anomaly detection scenarios on sensor signal data of new manufacturing conditions (e.g. new manufacturing process or machine or product) not observed during model training.

In order to alleviate overfitting to the majority class, the two classes, e.g. the normal and anomaly classes, may be balanced. For that a separate deep learning model to generate anomalies for each manufacturing condition may be trained based on data examples of its normal behavior. Hence, beside of the original data examples from normal machining behavior, additional synthetic data examples that mimic anomalous machining behavior may be acquired.

To act against catastrophic forgetting, the meta-learning algorithm may explicitly optimize for an initialization that leads to minimal forgetting (or event positive transfer), when exposed to different tasks in an online manner. This is done by minimizing the error on all tasks after having learned them sequentially starting from the initialization that we optimize.

In the following, it may be provided with more detail on the data preparation, the model training and the model application in the target scenario, anomaly detection during the machining of work pieces solely based on sensor signal data recorded by a data capturing device.

In order to train the model, it may be assumed that data from a reasonable set of sensors is available, which measures for example the torques of the various axes in a milling machine and control deviations. In addition, this data may be required for a sufficient set of work pieces and manufacturing conditions (e.g. machining processes). Moreover, the data has to be labeled in the sense that a domain expert has annotated where anomalies in the data are located. As a concrete example, in the present disclosure, the torque measurements of the milling spindle may be used, and deviations of the z-axis of 100 work pieces and 8 different milling processes may be controlled. The processes cover various roughing processes, like carving a pocket into the work piece, and finishing processes, like smoothing the top surface of the work piece. As a preprocessing step, the various signals by their standard deviation for each process may be scaled. For some signals, representative data for normal machining for each individual process from the data may be subtracted (scaled). This way these sensor signals are transformed to measure a kind of deviation from a pre-defined expectation.

Algorithm 3 shows an example of pseudo code for deploying (for model application) the trained model according to an embodiment of the present disclosure. When deploying the model for detecting anomalies for multiple new manufacturing conditions (e.g. new machining processes), it may be assumed that, for each manufacturing condition, sufficient data of normal machining has been collected, e.g. during the calibration phase of the machine and process. In Algorithm 3, the steps from the inner training loop (steps 10 to 13 of Algorithm 2) may be used to adapt the model parameters quickly to each of the new scenarios sequentially. Every time a new manufacturing condition arises (e.g. acquired a new machine or designed a new product), the same steps can be applied to the model to adapt it to this new manufacturing condition, without forgetting the previously learned scenarios. Note that the trained generator model is also used, when learning new tasks.

[Algorithm 3]

1. Initialize the models with the classifier parameters $\theta$ and generator parameters $\omega$ found during training

2. Make a copy on the current classifier initialization $\theta_{i,0} = \theta$

3. **for** each new $P_j$ **do:**

4. Preprocess the calibration data

5. Sample k training examples of normal machining behavior from $P_j$

6. Generate k′ training examples of anomalous machining behavior using the generator model $\omega$ using the previously sampled k examples

7. Evaluate the anomaly detection performance of the classifier model on the original and generated examples

8. Update the classifier model parameters $\theta_i$ to $\theta_{j+1}$ using a stochastic gradient descent update rule.

9. **end for**

When the model goes into production mode, i.e. performing anomaly detection in all manufacturing conditions it was exposed to, the continuously learned classifier model may be used to predict anomalies for the live data:

- Preprocess the live data coming from any of the manufacturing conditions, that the model was exposed to during model application.
- Initialize the model with the current parameters θj+1 found after having learned the last encountered task.
- Predict anomaly probabilities for the live data with the classifier model.

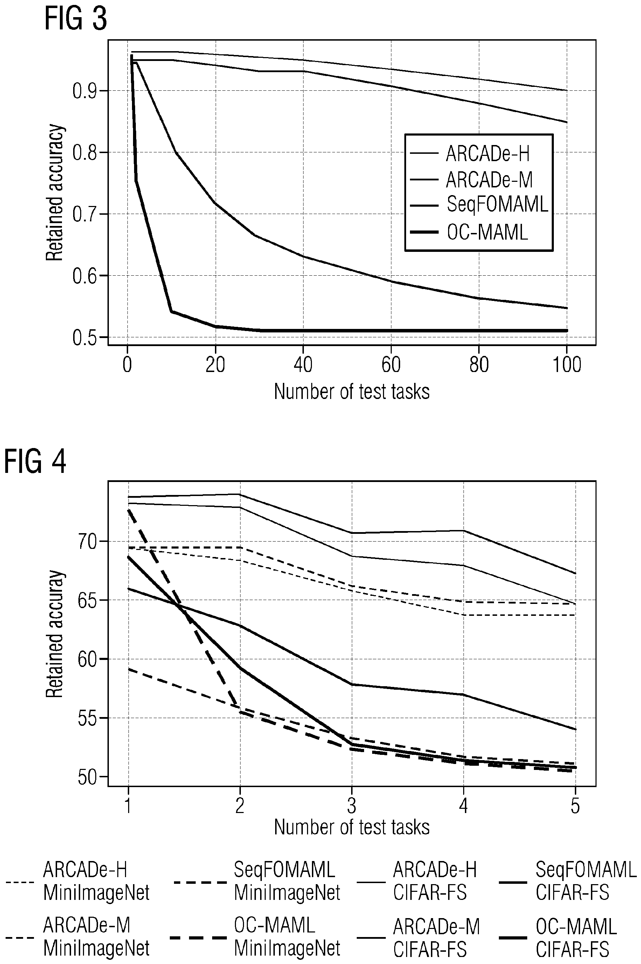

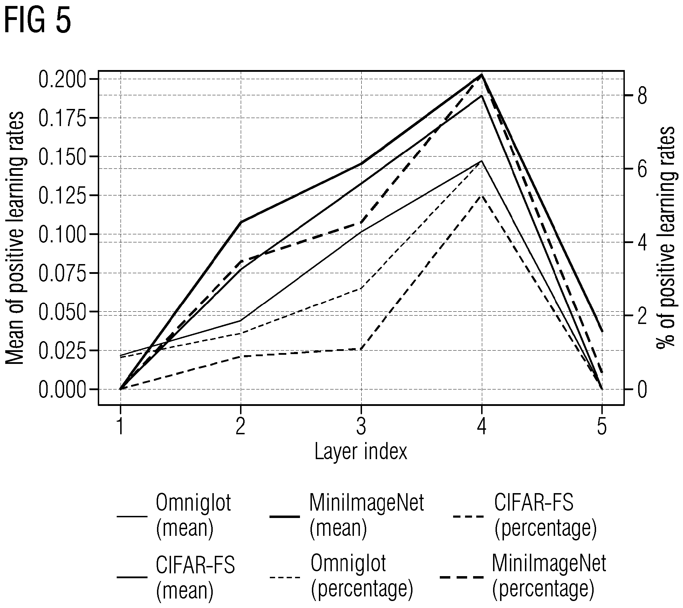

Figs. 3-5 show experimental results according to the present invention. More specifically, Fig. 3 shows a result of experiment representing retained accuracy of the present disclosure on Omniglot. Fig. 4 shows a result of experiment representing retained accuracy of the present disclosure on MiniImageNet and CIFAR-FS. Fig. 5 shows a result of experiment representing percentage of positive learning rates meta-learned by ARCADe-M;

In this experiment, three meta-learning benchmark datasets are provided for evaluating ARCADe: Omniglot (described in "One shot learning of simple visual concepts", 2011), MiniImageNet (described in "Optimization as a model for few-shot learning", 2016) and CIFAR-FS (described in "Meta-learning with differentiable closed-form solvers", 2018). Omniglot is composed of 20 instances of 1623 hand-written character classes from 50 different alphabets. The images have the size 28x28 pixels. 25 alphabets are used for meta-training, 5 alphabets are used for meta-validation and 20 alphabets are used for meta-testing. MiniImageNet contains 100 classes from ImageNet where each class includes 600 images of size 84x84x3. Official data split of 64 classes for meta-training, 16 for meta-validation and 20 for meta-testing are used. CIFAR-FS was derived from CIFAR-100 by dividing its classes into 64 classes for meta-training, 16 for meta-validation and 20 for meta-testing to make it suitable for meta-learning problems. Here, each class includes 600 images of size 32x32x3. The same data splits are used for ARCADe and the baselines.

It may be considered that the final retained accuracy, i.e. the average of the accuracies of the final model on the validation sets of all test tasks, as our main metric. The task-sequences composed of 10 tasks are used for meta-training on Omniglot and 5 tasks for meta-training on MiniImageNet and CIFAR-FS. For meta-testing task-sequence lengths between 1 and 100 are used for Omniglot and between 1 and 5 for the more challenging MiniImageNet and CIFAR-FS. During meta-training and meta-testing, each task is learned by performing only 3 gradient descent updates and using only 10 normal examples, across all datasets. This extends ARCADe's applicability to few-shot CAD problems, i.e. CAD problems that exhibit extreme data scarcity. The performance of the two ARCADe variants and the baselines is shown in Fig. 3 on Omniglot and in Fig. 4 on MiniImageNet and CIFAR-FS. For all datasets, the retained accuracy is averaged over 500 task-sequences from the meta-testing set $D_{test}$.

Based on the result of the experiment, the ARCADe may learn up to 100 OCC tasks sequentially on Omniglot, while losing only 6% accuracy, even though it was trained with only 10-tasks sequences. It may be observed that ARCADe-H outperforms ARCADe-M on Omniglot, while ARCADe-M achieves higher retained accuracy on MiniImageNet and CIFAR-FS. Explanation for this is that since MiniImageNet and CIFAR-FS have a higher variance in the input space, adapting the parameters of the feature extractor to the normal classes of the test tasks is beneficial. However, ARCADe-H can only adapt the parameters of the output layer, which results in a lower performance. The features meta-learned on the meta-training set of Omniglot, which includes by far more classes than the ones of MiniImageNet and CIFAR-FS, require less adaptation to perform well on the meta-testing set.

To assess the impact of meta-learning parameter specific learning rates, ARCADe with constant learning rates is evaluated, i.e. only parameter initializations are meta-learned. In Table 1, the results in terms of retained accuracy on test task-sequences with the same length as the ones used for meta-training are provided. Additionally meta-learning learning rates boost the performance of both ARCADe variants across all datasets. This validates our hypothesis that additionally meta-learning learning rates leads to a more effective inductive bias for the addressed CAD problem.

[Table 1]

| Model/Dataset | Omniglot | CIFAR-FS | MIN |
|---|---|---|---|
| ARCADe-M | 96.1 | 68.1 | 64.5 |
| ARCADe-M(constant$\alpha$) | 95.7 | 66.4 | 63.1 |
| ARCADe-H | 96 | 67.8 | 64.1 |
| ARCADe-H(constant$\alpha$) | 95.6 | 66.8 | 63.0 |

Finally, the characteristics of the meta-learned learning rates are investigated in order to gain a deeper insight into the learning strategy to which ARCADe-M converges. The learning rates may be clipped between 0 and 1, so only positive learning rates are active. As shown in Fig. 5, the percentage and mean of the positive (active) learning rate per neural network layer are presented.

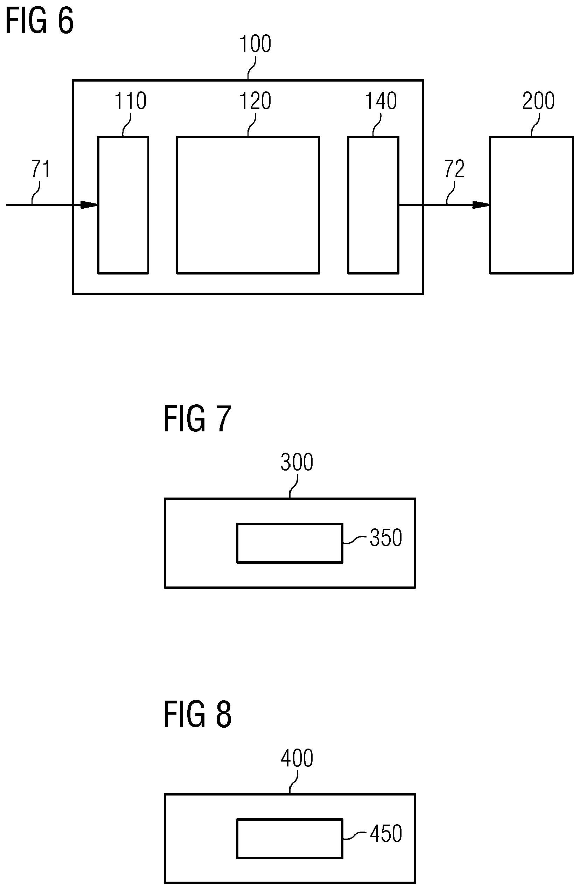

Fig. 6 shows an apparatus 100 according to an embodiment of the second aspect of the present invention, i.e. an apparatus for continual anomaly detection. In particular, the apparatus 100 is configured to perform the method according to any embodiment of the first aspect of the present invention, in particular the method as described in the foregoing with respect to Fig. 2.

The apparatus 100 comprises an input interface 110 for receiving an input signal 71. The input interface 110 may be realized in hard- and/or software and may utilize wireless or wire-bound communication. For example, the input interface 110 may comprise an Ethernet adapter, an antenna, a glass fiber cable, a radio transceiver and/or the like.

The apparatus 100 further comprises a computing device 120 configured to perform the steps S1 through S5. The computing device 120 may in particular comprise one or more central processing units, CPUs, one or more graphics processing units, GPUs, one or more field-programmable gate arrays FPGAs, one or more application-specific integrated circuits, ASICs, and or the like for executing program code. The computing device 120 may also comprise a non-transitory data storage unit for storing program code and/or inputs and/or outputs as well as a working memory, e.g. RAM, and interfaces between its different components and modules.

The apparatus may further comprise an output interface 140 configured to output an output signal 72. The output signal 72 may have the form of an electronic signal, as a control signal for a display device 200 for displaying the semantic relationship visually, as a control signal for an audio device for indicating the determined semantic relationship as audio and/or the like. Such a display device 200, audio device or any other output device may also be integrated into the apparatus 100 itself.

Fig. 7 shows a schematic block diagram illustrating a computer program product 300 according to the third aspect of the present invention, i.e. a computer program product 300 comprising executable program code 350 configured to, when executed (e.g. by the apparatus 100), perform the method according to the first aspect of the present invention, in particular the method as has been described in Fig. 2 in the foregoing.

Fig. 8 shows a schematic block diagram illustrating non-transitory computer-readable data storage medium 400 according to the fourth aspect of the present invention, i.e. a data storage medium 400 comprising executable program code 450 configured to, when executed (e.g. by the apparatus 100), perform the method according to the first aspect of the present invention, in particular the method as has been described with respect to Fig. 2 in the foregoing.

In the foregoing detailed description, various features are grouped together in the examples with the purpose of streamlining the disclosure. It is to be understood that the above description is intended to be illustrative and not restrictive. It is intended to cover all alternatives, modifications and equivalence. Many other examples will be apparent to one skilled in the art upon reviewing the above specification, taking into account the various variations, modifications and options as described or suggested in the foregoing.

**Claims**

1.  A computer-implemented method for building a model for a rapid continual anomaly detection comprising at least the steps of:

    acquiring a sequence of tasks to be learned, wherein each of the tasks includes a training set which consists of data belonging to a majority class and a validation set which consists of data belonging to the majority class and data belonging to a minority class;
    for each of the tasks, iteratively:

    adapting parameters of a function representing a model for the anomaly detection to the training set of a current task; and
    computing a first loss providing task-specific feedback for the anomaly detection, wherein the first loss is minimized in terms of performance, on the validation set of the current task, of parameters adapted to the training set of the current task;

    computing a second loss providing the task-specific feedback, wherein the second loss is minimized in terms of performance, on the validation set of all of the tasks, of final parameters adapted to the training sets of all of the tasks; and
    updating parameter-specific learning rates based on a sum of accumulated values of the first loss and accumulated values of the second loss.

2.  The method of claim 1,
    wherein the parameters adapted to the current task are determined as parameters to be adapted to a next task.

3.  The method of claim 1, further comprising:

    acquiring a new sequence of new tasks; and
    updating the final parameters to parameters further adapted to a new training set of the new tasks.

4.  The method of claim 1,
    wherein the new tasks are involved in different manufacturing processes or products from previously acquired sequence of tasks.

5.  The method of claim 3, further comprising:
    performing the anomaly detection for a live data based on the function representing the model of the anomaly detection configured in terms of the updated final parameters adapted to the new training set.

6.  The method of claim 1,
    wherein each of the tasks further includes a test set, which does not affect adapting parameters or computing the loss.

7.  The method of claim 6,
    wherein the training set, the validation set and the test set are mutually exclusive in each of the tasks.

8. The method of claim 1,
wherein the updated parameter-specific learning rates are used for adapting the final parameters for learning a new sequence of tasks.

9. The method of claim 1,
wherein the training set does not include data belonging to the minority class.

10. The method of claim 1,
wherein the majority class is a class in which larger number of data compared to another class is included.

11. The method of claim 1,
wherein the parameters of the function are adapted by using a method of gradient descent for the function.

12. The method of claim 1,
wherein the parameters of the function are adapted based on the parameter-specific learning rates.

13. The method of claim 1,
wherein the parameter-specific learning rates are updated based on a method of gradient descent and a learning rate for meta-update.

14. An apparatus configured to perform the method according to claim 1.

15. A computer program product comprising executable program (350) code configured to, when executed, perform the method according to claim 1.

16. A non-transitory computer-readable data storage medium comprising executable program code configured to, when executed, perform the method according to claim 1.

## FIG 1

——— meta-learning
‑ ‑ ‑ learning/adaptation

$\theta$

$\nabla \mathcal{L}_3$

$\nabla \mathcal{L}_2$

$\nabla \mathcal{L}_1$

$\theta_3^*$

$\theta_1^*$

$\theta_2^*$

## FIG 2

S1

S2

S3

S4

S5

## FIG 3

## FIG 4

FIG 5

FIG 6

100

110    120    140    200

71    72

FIG 7

300

350

FIG 8

400

450

Europäisches
Patentamt

European
Patent Office

Office européen
des brevets

# EUROPEAN SEARCH REPORT

Application Number

EP 20 19 4814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHMED FRIKHA ET AL: "ARCADe: A Rapid Continual Anomaly Detector", ARXIV.ORG, CORNELL UNIVERSITY LIBRARY, 201 OLIN LIBRARY CORNELL UNIVERSITY ITHACA, NY 14853, 10 August 2020 (2020-08-10), XP081736082, * page 1 - page 7, paragraph 2 * | 1-16 | INV. G06N3/08 |
| A | FUJITA HIROFUMI ET AL: "Detecting outliers with one-class selective transfer machine", KNOWLEDGE AND INFORMATION SYSTEMS, SPRINGER VERLAG,LONDON, GB, vol. 62, no. 5, 11 October 2019 (2019-10-11), pages 1781-1818, XP037096540, ISSN: 0219-1377, DOI: 10.1007/S10115-019-01407-5 [retrieved on 2019-10-11] * the whole document * | 1-16 | |
| A | LIU YINTAO ET AL: "Weighted Task Regularization for Multitask Learning", 2013 IEEE 13TH INTERNATIONAL CONFERENCE ON DATA MINING WORKSHOPS, IEEE, 7 December 2013 (2013-12-07), pages 399-406, XP032573528, DOI: 10.1109/ICDMW.2013.158 [retrieved on 2014-03-02] * the whole document * | 1-16 | **TECHNICAL FIELDS SEARCHED (IPC)** G06N |
| A | US 2019/147298 A1 (RABINOVICH ANDREW [US] ET AL) 16 May 2019 (2019-05-16) * the whole document * | 1-16 | |

The present search report has been drawn up for all claims

| Place of search | Date of completion of the search | Examiner |
|---|---|---|
| The Hague | 23 February 2021 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 19 4814

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2021

| Patent document cited in search report | Publication date | Patent family member(s) | Publication date |
|---|---|---|---|
| US 2019147298 A1 | 16-05-2019 | AU 2018368279 A1 | 14-05-2020 |
| | | CA 3080005 A1 | 23-05-2019 |
| | | CN 111328400 A | 23-06-2020 |
| | | EP 3710990 A1 | 23-09-2020 |
| | | JP 2021503122 A | 04-02-2021 |
| | | KR 20200087780 A | 21-07-2020 |
| | | US 2019147298 A1 | 16-05-2019 |
| | | WO 2019099305 A1 | 23-05-2019 |

EPO FORM P0459

For more details about this annex : see Official Journal of the European Patent Office, No. 12/82